Europäisches Patentamt

(19) European Patent Office

Office européen des brevets

(11) Publication number: **0 112 065**

**A1**

(12) # EUROPEAN PATENT APPLICATION

(21) Application number: **83307066.7**

(22) Date of filing: **18.11.83**

(51) Int. Cl.³: **G 01 F 1/60**

(30) Priority: **10.12.82 US 448535**

(43) Date of publication of application:
**27.06.84 Bulletin 84/26**

(84) Designated Contracting States:
**DE FR GB IT NL**

(71) Applicant: **HALLIBURTON COMPANY**
**P.O. Drawer 1431**
**Duncan Oklahoma 73536(US)**

(72) Inventor: **Stephenson, Stanley Vernon**
**721 Millwood**
**Duncan Oklahoma 73536(US)**

(74) Representative: **Wain, Christopher Paul et al,**
**A.A. THORNTON & CO. Northumberland House 303-306**
**High Holborn**
**London WC1V 7LE(GB)**

(54) **Power factor correction for magnetic flowmeter.**

(57) The power requirement of an alternating current magnetic flowmeter (10) is reduced by adding sufficient capacitance (30) across the alternating current power supply (16,18) to bring the power factor of the flowmeter substantially to unity.

- 1 -

## POWER FACTOR CORRECTION FOR MAGNETIC FLOWMETER

This invention relates to a method of reducing the power consumption of an alternating current magnetic flowmeter, and to such a flowmeter of reduced power consumption.

Magnetic flowmeters powered by alternating current power supplies are well known. Such meters operate by measuring the voltage produced by a conductive fluid passing through a fixed diameter tube placed in an electrically generated magnetic field. The voltage produced is a linear function of volumetric flow rate through a fixed diameter tube according to Faraday's law of electromagnetic induction. An example of such a flowmeter is the 1800 Series Magnetic Flowtube Lined Metal Metering Tube, produced by the Foxboro Company, Foxboro, Massachusetts. The supply voltage for such a meter is 120 volts AC + 10% - 15%, at 50 or 60 Hz, $\pm$ 2 Hz, as specified. While this instrument provides acceptable accuracy, for some applications the power required to operate the meter renders it unsatisfactory. This is particularly true for mobile applications, such as when the meter mounted on a motor vehicle is taken to the site of a petroleum well and employed to measure additives used in a treating fluid for the well. In such a situation, power is supplied by the 12 volt DC electrical system of the motor vehicle, through a 12 volt DC to 120 volt AC inverter. The use of one or more of these flowmeters in such an application, with other electrical devices which are being run concurrently, requires excessively large storage battery capacity and/or a large capacity battery charging device, such as an alternator or generator. As it is desirable to be able to conduct measurements with the flowmeter without the motor vehicle engine running in case of engine failure, this need for larger storage battery capacity severely reduces the weight and volumetric capacity of the vehicle for other items, as well as increasing cost.

We have now devised a method of reducing the power consumption requirements of an alternating current powered magnetic flowmeter. We have found that, by placing a sufficient capacitance across the alternating current power supply, the power factor of the flowmeter can be brought to substantially unity, and the power draw of the flowmeter can be substantially reduced.

According to the present invention, there is provided a magnetic flowmeter to be powered by an alternating current power supply characterised by including a capacitance in parallel with the inductance of said flowmeter, said capacitance being of sufficient magnitude to bring the voltage and amperage of said power supply substantially into phase with one another.

The invention also includes a method of reducing power consumption in an alternating current powered magnetic flowmeter, comprising placing a capacitance in parallel with the inductance of said flowmeter, whereby the power factor of said flowmeter is brought substantially to unity.

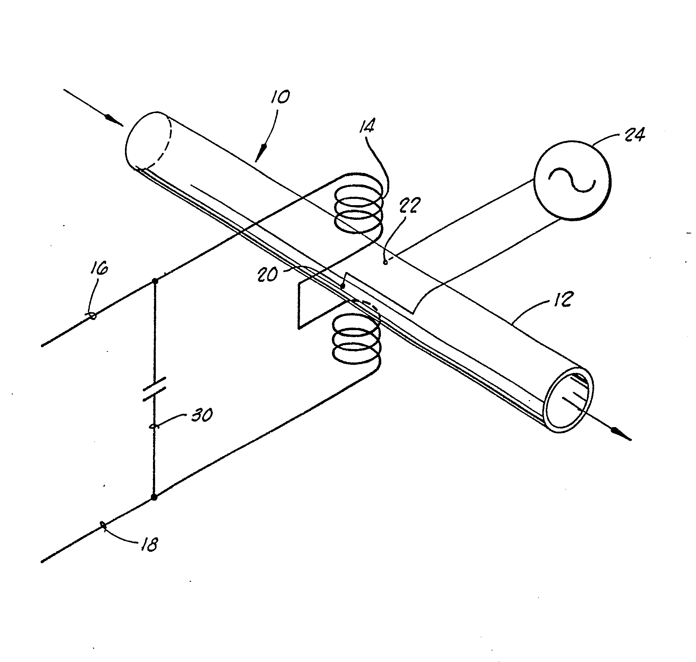

The present invention may be better understood by one skilled in the art through reference to the following detailed description, taken in conjunction with the accompanying drawing which schematically illustrates one embodiment of magnetic flowmeter of the invention.

Referring to the drawing, magnetic flowmeter 10, is schematically depicted as comprising a constant diameter tube 12 made of or lined with a non-conductive substance, oriented in a magnetic field generated by an electrically powered inductor 14. The electrical power supply leads 16 and 18 of an alternating current power supply (not shown) lead to the inductor 14. As a conductive fluid flows in tube 12 (as shown by arrows on the drawing figure) through the magnetic field generated by inductor 14 a low level electrical voltage is generated according to Faraday's law of electromagnetic induction, which states that an induced voltage occurs when a conductor (in this instance the conductive fluid) passes through a magnetic field at right angles to that field. Furthermore, the induced voltage is proportioned to the intensity of the magnetic field, multiplied by the width and velocity of the conductor.

The induced low level voltage is sensed by sensing electrodes 20, 22 placed in diametrically opposite positions in the wall of flow tube 12. This voltage is amplified and conditioned by means well known in the art to produce an output signal which can be measured with a commercially available means 24, such as an ammeter, volt meter or frequency meter depending on the type output for which the low level signal is conditioned. The low level voltage produced is proportional to the velocity of the conductive fluid, being a function of its volumetric flow rate through the constant diameter tube 12.

The power circuit for flowmeter 10 as described possesses both resistance and inductance, which causes the current to lag the voltage through the inductor 14, and increases the voltampere power consumption of flowmeter 10.

The present invention comprises the addition of a capacitance 30 in parallel with the inductor 14, or to phrase it another way, across the power leads 16, 18 of the alternating current power supply. This capacitance must be of sufficient magnitude to bring the power supply voltage and amperage through the inductor 14 substantially into phase with one another. This alteration may also be stated as bringing the power factor of the flowmeter 10 closer to unity.

By way of example and not limitation, the Foxboro 1800 Series Magnetic Flowtube Lined Metal Metering Tube, as previously referred to, was measured for power consumption. The inner diameter of this device was two-tenths (2/10) of an inch (0.5 cm). CL-11, a cross-linking agent used in petroleum well fracturing operations, diluted one part to four parts water, was employed as the conductive fluid. Eight tests were run using the referenced Foxboro meter to measure known volumes of fluid, four without power factor correction, and four with a power factor correction of 100 micro-farad capacitance. The parameters and results of the test are shown in Table 1, below:

TABLE 1

| Power Factor | Measured Volume (Gal) | (dm³) | Indicated Volume (gal) | (dm³) | Time (Min:Sec) | Error (%) |
|---|---|---|---|---|---|---|
| | 1.0 | 3.79 | 0.99 | 3.75 | 4:49.1 | -1.0 |
| NORMAL | 1.0 | 3.79 | 0.99 | 3.75 | 1:35.6 | -1.0 |
| | 2.0 | 7.58 | 1.97 | 7.47 | 2:01.0 | -1.5 |
| | 2.0 | 7.58 | 2.01 | 7.62 | 1:15.5 | +0.5 |
| | 1.0 | 3.79 | 0.99 | 3.75 | 4:50.2 | -1.0 |
| CORRECTED | 1.0 | 3.79 | 0.99 | 3.75 | 1:34.0 | -1.0 |
| | 2.0 | 7.58 | 1.96 | 7.43 | 2:01.5 | -2.0 |
| | 2.0 | 7.58 | 1.99 | 7.43 | 1:13.2 | -0.5 |

It will be noted that the meter error was not changed significantly by the introduction of the power factor correction; the greatest change was a 1% shift at a 2 gallon ($7.58dm^3$) per minute flow rate, from +0.5% error to -0.5% error. However, the reduction in power requirements of the meter and particularly the magnitude thereof with the correction, was unexpected. Before correction, power consumption of the meter was 564 volt-amperes; after correction it was 84 volt-amperes, a reduction of 85%. Assuming an 80% efficiency in power conversion from 12 volt DC to 120 volt AC using an inverter, 56 amperes at 12 volts DC would be required to supply 564 volt-amperes at 120 volts AC. This is reduced to 8 amperes at 12 volts DC required to supply 84 volt-amperes at 120 volts AC. The power requirement of the meter is therefore reduced to one-seventh of its previous level.

While particularly valuable in mobile operations where power availability is limited in many instances, the invention is also of great utility in stationary industrial and commercial applications due to its great reduction in the power requirements and hence the cost, of operating a magnetic flowmeter. Of course, when a substantial number of flowmeters are required, those savings are particularly impressive. In addition, it should be noted that the reduction in flowmeter power consumption achieved by the present invention also results in a significant reduction in heating of the conductive fluid by the flowmeter inductor, an important consideration in temperature-critical processes or when a temperature-critical fluid is being measured, so as to avoid detrimental effects to the process or to the fluid itself.

It will be obvious to one of ordinary skill in the art that a number of additions, deletions, and modifications may be made to the method and apparatus described with reference to the drawing.

0112065

- 7 -

<u>CLAIMS:</u>

1. A magnetic flowmeter (10) to be powered by an alternating current power supply (16,18) characterised by including a capacitance (30) in parallel with the inductance (14) of said flowmeter, said capacitance being of sufficient magnitude to bring the voltage and amperage of said power supply substantially into phase with one another.

2. A flowmeter according to claim 1, characterised in that said capacitance is of sufficient magnitude to bring the power factor of said flowmeter substantially to unity.

3. An alternating current magnetic flowmeter (10) which comprises: a flow tube (12) of substantially fixed inner diameter; an electrically powered (in use) inductance (14) proximate said flow tube; means (24) to measure voltage generated by the flow of a conductive fluid through said flow tube and through a magnetic field generated by said inductance; characterised by a capacitance (30) in parallel with said inductance, said capacitance being of a sufficient magnitude to bring the power factor of said flowmeter substantially to unity.

4. A method of reducing power consumption in an alternating current powered magnetic flowmeter (10) comprising placing a capacitance (30) in parallel with the inductance (14) of said flowmeter, whereby the power factor of said flowmeter is brought substantially to unity.

5.        A method of reducing power consumption in a magnetic flowmeter (10) powered by an alternating current power supply, comprising increasing the capacitance in the power supply circuit to the inductance of said flowmeter so as to bring the voltage and amperage of said power supply substantially into phase.

European Patent
Office

**EUROPEAN SEARCH REPORT**

| DOCUMENTS CONSIDERED TO BE RELEVANT | | | EP 83307066.7 |
|---|---|---|---|
| Category | Citation of document with indication, where appropriate, of relevant passages | Relevant to claim | CLASSIFICATION OF THE APPLICATION (Int. Cl. ³) |
| X<br>Y | DD - A - 45 491 (MILDNER)<br>* Totality *<br><br>-- | 1,2<br>3 | G 01 F 1/58<br>G 01 F 1/60 |
| Y | L. BERGMANN, CL. SCHAEFER "Lehrbuch der Experimentalphysik", vol. 2, Elektrizitätslehre, 5th edition 1966<br>WALTER DE GRUYTER & CO, Berlin pages 282-284<br>* Fig. 381 *<br><br>-- | 1-3 | |
| Y | US - A - 3 926 049 (SEEBODE)<br>* Fig. 1 *<br><br>-- | 3 | TECHNICAL FIELDS SEARCHED (Int. Cl. ³) |
| A | DE - A1 - 2 724 619 (KRUPP)<br>* Page 5, lines 1-5 *<br><br>---- | | G 01 F 1/00 |

The present search report has been drawn up for all claims

| Place of search | Date of completion of the search | Examiner |
|---|---|---|
| VIENNA | 11-04-1984 | BURGHARDT |